(19) Europäisches Patentamt
European Patent Office
Office européen des brevets

(11) Veröffentlichungsnummer : **0 110 820**
**B1**

(12) # EUROPÄISCHE PATENTSCHRIFT

(45) Veröffentlichungstag der Patentschrift : **09.09.87**

(51) Int. Cl.⁴ : **C 07 F 9/15**, C 08 K 5/52// C10M137/02

(21) Anmeldenummer : **83810492.5**

(22) Anmeldetag : **26.10.83**

(54) **Aminosubstituierte Dibenzodioxaphosphepine und Dioxaphosphocine.**

(30) Priorität : **01.11.82 US 437930**

(43) Veröffentlichungstag der Anmeldung : **13.06.84 Patentblatt 84/24**

(45) Bekanntmachung des Hinweises auf die Patenterteilung : **09.09.87 Patentblatt 87/37**

(84) Benannte Vertragsstaaten : **DE FR GB IT**

(56) Entgegenhaltungen :
**EP-A- 0 009 115**
**EP-A- 0 053 098**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Spivack, John D.**
**1 Blue Jay Street**
**Spring Valley New York 10977 (US)**
Erfinder : **Pastor, Stephen D.**
**112 Union Road**
**Spring Valley New York 10977 (US)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Organische polymere Materialien wie Kunststoffe und Harze sowie Schmieröle und Mineralöle unterliegen thermischem, oxydativem und photoinduziertem Abbau. Zahlreiche Stabilisatoren zur Stabilisierung verschiedener Substrate sind aus dem Stand der Technik bekannt. Deren Wirksamkeit variiert je nach den Ursachen des Abbaus und dem stabilisierten Substrat. Im Verlauf dieser Arbeiten wurde gefunden, dass Stabilisatoren, die über längere Zeiten sehr wirksame Antioxydantien sind, verhältnismässig schlechte Verarbeitungsstabilisatoren sind und das Substrat nicht gegen thermischen Abbau während kurzer Zeit bei verhältnismässig hohen Verarbeitungstemperaturen schützen. Viele Stabilisatoren sind mit den Substraten relativ unverträglich, wodurch während der Lebenszeit eines Produkts Probleme auftreten und die Wirksamkeit des Stabilisators verringert wird. Die Stabilisatoren sind zum Teil entweder zu flüchtig oder thermisch bzw. hydrolytisch zu labil, um als technische Stabilisatoren brauchbar zu sein.

Die Phosphite der vorliegenden Erfindung besitzen eine ungewöhnliche Kombination wünschenswerter Eigenschaften gegenüber den Phosphiten des Standes der Technik, weshalb diese Verbindungen besonders wirksam und nützlich als Stabilisatoren sind.

Phosphite sind in verschiedenen Veröffentlichungen offenbart. Die U.S. Patentschrift Nr. 4 196 117 beschreibt cyclische Biphenylphosphite, worin das Phosphoratom durch O- oder S-Kohlenwasserstoffgruppen oder eine cyclische Kohlenwasserstoffbiphenylphosphitgruppe substituiert ist. Die sowjetrussischen Patentschriften Nr. 378 389, 429 070 und 440 390 offenbaren die Stabilisierung verschiedener Polymerer mit organischen Phosphiten oder solche Phosphite enthaltenden Gemischen, worin die Phosphite cyclische Methylen-bisphenylphosphite sind. Weitere 1,1'-Biphenyl-2,2'-diyl-phosphite sind aus Chemical Abstracts, 68, 12597s (1968), 73, 15657a (1970) und 75, 130242q (1971) bekannt. Diese verschiedenen Verbindungen werden als Stabilisatoren für unterschiedliche Polymere bezeichnet. Die vorliegenden Verbindungen sind jedoch als Verarbeitungsstabilisatoren, als Farbstabilisatoren sowie bezüglich Hydrolysebeständigkeit bedeutend wirksamer.

Ferner sind Alkanolaminphosphite und die Stabilisierung von Vinyl- und Vinylidenharzen damit in der U.S. Patentschrift Nr. 2 841 607 beschrieben. Weitere Alkanolaminester cyclischer Phosphite sind aus der europäischen Patenschrift 0 053 098 bekannt. Insbesondere handelt es sich in den letztgenannten Patenten um mit tertiären Aminogruppen substituierte cyclische Phosphite. So ist z. B. in der europäischen Patentschrift 0 053 098 N,N-Dimethylaminoäthyl-(3,3',5,5'-tetra-tert.-butyl-1,1'-biphenyl-2,2'-diyl)-phosphit offenbart.

Dementsprechend besteht die Hauptaufgabe dieser Erfindung darin, cyclische Biphenylphosphitverbindungen zur Verfügung zu stellen, welche eine gegenüber den vorbekannten Phosphitverbindungen verbesserte Leistung bei der Verarbeitungsstabilisierung aufweisen.

Verschiedene weitere Aufgaben und Vorteile dieser Erfindung sind aus der nachfolgenden Beschreibung ersichtlich.

Die erfindungsgemässen Verbindungen entsprechen der Formel

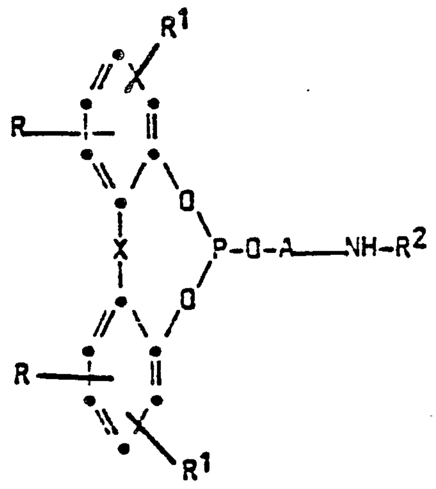

worin

R und $R^1$ unabhängig voneinander für Wasserstoff, Alkyl mit 1 bis 18 Kohlenstoffatomen, Cycloalkyl mit 5 oder 6 Kohlenstoffatomen oder gegebenenfalls durch Alkyl mit 1 bis 18 Kohlenstoffatomen substituiertes Phenyl,

A für Alkylen mit 1 bis 6 Kohlenstoffatomen oder Cycloalkylen mit 5 oder 6 Kohlenstoffatomen,

X für eine direkte Bindung oder Alkyliden mit 1 bis 12 Kohlenstoffatomen und

$R^2$ für Wasserstoff, Alkyl mit 1 bis 12 Kohlenstoffatomen oder Gruppe

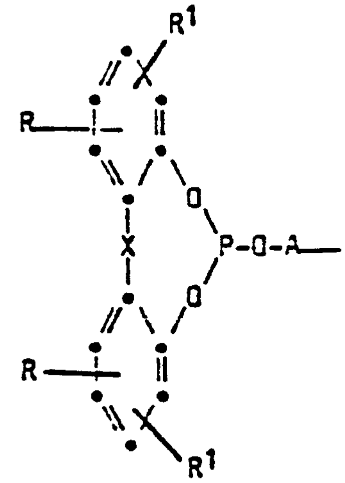

stehen.

Unter den Verbindungen der obigen Struktur werden solche bevorzugt, worin R (wenn R nicht gleich H) in den Phenylringen jeweils in ortho-Stellung zum Phosphitsauerstoff steht.

Die Gruppen R und $R^1$ sind vorzugsweise geradkettiges oder verzweigtes Alkyl mit 4 bis 8 Kohlenstoffatomen, wie n-Butyl, sek.-Butyl, tert.-Butyl, tert.-Pentyl, 2-Aethylhexyl, n-Octyl und tert.-Octyl. Besonders bevorzugt werden tert.-Butyl-, tert.-Pentyl- und tert.-Octylgruppen. Ferner befindet sich die Gruppe $R^1$ besonders bevorzugt in der para-Stellung zum Sauerstoff, insbesondere wenn $R^1$ tert.-Alkyl ist.

$R^1$ kann zwar für Wasserstoff oder Alkyl mit 1 bis 18 Kohlenstoffatomen stehen, doch ist es vorzugsweise eine entweder geradkettige oder verzweigte Alkylgruppe mit 1 bis 8 Kohlenstoffatomen. Dabei wird tert.-Alkyl mit 4 bis 8 Kohlenstoffatomen besonders bevorzugt.

Zu den Substituenten am Phenyl in R und $R^1$ zählen Alkylgruppen mit 1 bis 18 Kohlenstoffatomen.

X ist vorzugsweise Niederalkyliden der Formel

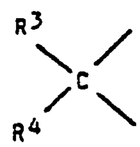

worin $R^3$ und $R^4$ unabhängig voneinander für Wasserstoff oder Alkyl mit 1 bis 7 Kohlenstoffatomen stehen, mit der Massgabe, dass die Anzahl Kohlenstoffatome 12 nicht übersteigt.

$R^2$ ist vorzugsweise Wasserstoff, Alkyl mit 1 bis 4 Kohlenstoffatomen oder die angegebene Phosphitgruppe.

Die erfindungsgemässen Phosphite lassen sich dadurch herstellen, dass man ein alkyliertes 2,2'-Biphenol oder ein alkyliertes 2,2'-Alkyliden-bis-phenol mit Phosphortrichlorid gegebenenfalls in Gegenwart eines Lösungsmittels zum entsprechenden Phosphorochlorodit reagieren lässt, welches seinerseits mit einem Aminoalkoxyd oder Alkanolamin zum erwünschten Produkt umgesetzt wird. Das Lösungsmittel ist vorzugsweise aromatisch, wie Benzol, Toluol oder Xylol. Die Reaktionstemperatur liegt im Bereich von Raumtemperatur bis zur Rückflusstemperatur des Reaktionsmediums. Bei der bevorzugten Methode zur Herstellung der erfindungsgemässen Verbindungen handelt es sich um die Umsetzung des Phosphorochlorodits mit einem entsprechenden Alkanolamin in Gegenwart eines Protonenakzeptors wie eines tertiären Amins, z. B. Triäthylamin oder Pyridin.

Die zur Herstellung dieser Phosphite erforderlichen Ausgangsstoffe sind im Handel erhältlich oder nach bekannten Methoden herstellbar.

Die zur Herstellung der Verbindungen eingesetzten Alkanolamine entsprechen den Formeln

$$R^2—NH—A—OH$$

oder

$$NH—(A—O)_2$$

worin $R^2$ für Wasserstoff oder Alkyl mit 1 bis 12 Kohlenstoffatomen steht und A die oben angegebene Bedeutung hat.

Zu bevorzugten Alkanolaminen zählen Aethanolamin, Diäthanolamin, N-Methyläthanolamin, N-Aethyläthanolamin und N-tert.-Butyläthanolamin.

Eine analoge Synthesemethode unter Ersatz der tertiären Amine durch Alkalihydroxyde oder -carbonate im Syntheseschema käme ebenfalls in Frage. Die Reaktionsfolgen können so durchgeführt werden, dass man die erfindungsgemässen Verbindungen ohne Isolierung des Chloroditzwischenprodukts erhält.

Die erfindungsgemässen Verbindungen sind bei der Stabilisierung organischer Materialien wie Kunststoffen, Polymeren und Harzen sowie Mineral- und Syntheseflüssigkeiten wie Schmierölen und Umlaufölen wirksam.

Die erfindungsgemässen Verbindungen sind besonders nützlich als Stabilisatoren, speziell zum Schutz von Polyolefinen, beispielsweise Polyäthylen, Polypropylen, Polyisobutylen, Poly-(buten-1), Poly-(penten-1), Poly-(3-methylbuten-1), Poly-(4-methyl-penten-1) und verschiedenen Aethylen/Propylencopolymeren.

Zu weiteren Substraten, bei denen die erfindungsgemässen Verbindungen besonders nützlich sind, zählen Polystyrol, einschliesslich schlagzähem Polystyrol, ABS-Harz, SBR, Isopren sowie Naturkautschuk, Polyester wie Polyäthylenterephthalat und Polybutylenterephthalat sowie Copolymere.

Polyurethane, Polycarbonate, Polyamide wie Nylon-6/6 sowie Copolyamide und Polysulfone werden ebenfalls stabilisiert.

Die erfindungsgemässen, durch primäre und sekundäre Aminogruppen substituierten cyclischen Phosphite stellen auch wertvolle chemische Zwischenprodukte dar. Im Gegensatz zu tertiären Verbindungen ohne reaktiven Wasserstoff können diese primären und sekundären Verbindungen somit verschiedene Substitutions- und Additionsreaktionen eingehen. Dazu gehören typischerweise (1) die Michael-Addition, (2) Addition an Aldehyde und Ketone, (3) Acylierung zu Amiden, (4) Sulfonierung zu Sulfonamiden, (5) Alkylierung und (6) Reaktion mit Epoxiden. Eine Erörterung der Reaktionen von Aminen findet sich in I.O. Sutherland, Herausgeber, « Comprehensive Organic Chemistry [Ausführliche organische Chemie] », Pergamon Press, New York, 1979, Band 2, S. 38-42, und J. March, « Advanced Organic Chemistry [Vertiefte organische Chemie] », McGraw-Hill, New York, 1977.

Die stabilisierbaren Polymeren schliessen allgemein die folgenden ein :

1. Polymere von Monoolefinen und Diolefinen, beispielsweise Polyäthylen (gegebenenfalls vernetzt), Polypropylen, Polyisobutylen, Polybuten-1, Polymethylpenten-1, Polyisopren oder Polybutadien sowie Polymere von Cycloolefinen, z. B. Cyclopenten oder Norbornen.

2. Gemische der unter 1) genannten Polymeren, beispielsweise Gemische von Polypropylen mit Polyäthylen oder Polyisobutylen.

3. Copolymere von Monoolefinen und Diolefinen miteinander oder mit anderen Vinylmonomeren, wie beispielsweise Aethylen/Propylen, Propylen/Buten-1, Propylen/Isobutylen, Aethylen/Buten-1, Propylen/Butadien, Isobutylen/Isopren, Aethylen/Aethylacrylat, Aethylen/Alkylmethacrylate, Aethylen/Vinylacetat oder Aethylen/Acrylsäurecopolymere und deren Salze (Ionomere) sowie Terpolymere von Aethylen mit Propylen und einem Dien wie Hexadien, Dicyclopentadien oder Aethylidennorbornen.

4. Polystyrol.

5. Statistische Copolymere des Styrols oder α-Methylstyrols mit Dienen oder Acrylderivaten, wie beispielsweise Styrol/Butadien, Styrol/Acrylnitril, Styrol/Alkylmethacrylate, Styrol/Acrylnitril/Methylacrylat, hochschlagzähe Gemische aus Styrolcopolymeren und einem weiteren Polymeren wie beispielsweise einem Polyacrylat, einem Dienpolymeren oder einem Aethylen/Propylen/Dienterpolymeren, sowie Blockcopolymere des Styrols, wie beispielsweise Styrol/Butadien/Styrol, Styrol/Isopren/Styrol, Styrol/Aethylen/Butylen/Styrol oder Styrol/Aethylen/Propylen/Styrol.

6. Pfropfcopolymere des Styrols, wie beispielsweise Styrol auf Polybutadien, Styrol und Acrylnitril auf Polybutadien, Styrol und Alkylacrylate oder -methacrylate auf Polybutadien, Styrol und Acrylnitril auf Aethylen/Propylen/Dienterpolymeren, Styrol und Acrylnitril auf Polyacrylaten oder Polymethacrylaten, Styrol und Acrylnitril auf Acrylat/Butadiencopolymeren sowie deren Gemische mit den unter 5) angeführten Copolymeren, beispielsweise die als ABS-, MBS-, ASA- oder AES-Polymere bekannten Copolymergemische.

7. Halogenhaltige Polymere, wie Polychloropren, chlorierter Kautschuk, chloriertes oder sulfochloriertes Polyäthylen, Polymere aus halogenhaltigen Vinylverbindungen, wie beispielsweise Polyvinylchlorid, Polyvinylidenchlorid, Polyvinylfluorid, Polyvinylidenfluorid sowie deren Copolymere, wie beispielsweise Vinylchlorid/Vinylidenchlorid-, Vinylchlorid/Vinylacetat- oder Vinylidenchlorid/Vinylacetatcopolymere.

8. Von α,β-ungesättigten Säuren und deren Derivaten abgeleitete Polymere, wie Polyacrylate und Polymethacrylate, Polyacrylamide und Polyacrylnitril.

9. Copolymere aus den unter 8) angeführten Monomeren miteinander oder mit anderen ungesättigten Monomeren, wie beispielsweise Acrylnitril/Butadien-, Acrylnitril/Alkylacrylat- oder Acrylnitril/Vinylchloridcopolymere oder Acrylnitril/Alkylmethacrylat/Butadienterpolymere.

10. Von ungesättigten Alkoholen und Aminen abgeleitete Polymere oder deren Acylderivate oder Acetale, wie Polyvinylalkohol, Polyvinylacetat, Polyvinylstearat, Polyvinylbenzoat, Polyvinylmaleinat, Polyvinylbutyral, Polyallylphthalat oder Polyallylmelamin.

11. Homopolymere und Copolymere cyclischer Aether, wie Polyalkylenglykole, Polyäthylenoxyd, Polypropylenoxyd oder deren Copolymere mit Bisglycidyläthern.

12. Polyacetale, wie Polyoxymethylen sowie Aethylenoxyd als Comonomer enthaltende Polyoxymethylene.

13. Polyphenylenoxyde und -sulfide.

14. Von Polyäthern, Polyestern oder Polybutadienen abgeleitete Polyurethane mit Hydroxylendgruppen auf einer Seite und aliphatischen oder aromatischen Polyisocyanaten auf der anderen Seite, sowie deren Vorstufen.

15. Von Diaminen und Dicarbonsäuren und/oder Aminocarbonsäuren bzw. den entsprechenden Lactamen abgeleitete Polyamide und Copolyamide, wie Polyamid-4, Polyamid-6, Polyamid-6/6, Polyamid-6/10, Polyamid-11, Polyamid-12, Poly-2,4,4-trimethylhexamethylenterephthalamid oder Poly-m-phenylenisophthalamid sowie deren Copolymere mit Polyäthern wie beispielsweise Polyäthylenglykol, Polypropylenglykol oder Polytetramethylenglykolen.

16. Polyharnstoffe, Polyimide und Polyamid-imide.

17. Von Dicarbonsäuren und Dialkoholen und/oder Hydroxycarbonsäuren oder den entsprechenden Lactonen abgeleitete Polyester, wie Polyäthylenterephthalat, Polybutylenterephthalat, Poly-1,4-dimethylolcyclohexanterephthalat und Polyhydroxybenzoate sowie von Polyäthern mit Hydroxylendgruppen abgeleitete Blockcopolyäther-ester.

18. Polycarbonate.

19. Polysulfone und Polyäthersulfone.

20. Von Aldehyden einerseits und Phenolen, Harnstoffen und Melaminen andererseits abgeleitete vernetzte Polymere, wie Phenol/Formaldehydharze, Harnstoff/Formaldehydharze und Melamin/Formaldehydharze.

21. Trocknende und nichttrocknende Alkydharze.

22. Von Copolyestern gesättigter und ungesättigter Dicarbonsäuren mit mehrwertigen Alkoholen und Vinylverbindungen als Vernetzungsmittel abgeleitete ungesättigte Polyesterharze, einschliesslich deren halogenhaltigen, schwer entflammbaren Modifikationen.

23. Von substituierten Acrylestern abgeleitete duroplastische Acrylharze, wie Epoxy-acrylate, Urethan-acrylate oder Polyester-acrylate.

24. Alkydharze, Polyesterharze oder Acrylatharze im Gemisch mit Melaminharzen, Harnstoffharzen, Polyisocyanaten oder Epoxidharzen als Vernetzungsmittel.

25. Von Polyepoxiden, z. B. Bis-glycidyläthern oder cycloaliphatischen Diepoxiden und aromatischen Diepoxiden abgeleitete, vernetzte Epoxidharze.

26. Natürliche Polymere, wie Cellulose, Kautschuk, Gelatine und deren chemisch polymer-homolog modifizierte Derivate, wie Celluloseacetate, Cellulosepropionate und Cellulosebutyrate bzw. Celluloseäther wie Methylcellulose.

27. Natürlich vorkommende und synthetische organische Materialien, die reine monomere Verbindungen oder Gemische solcher Verbindungen darstellen, beispielsweise Mineralöle, tierische und pflanzliche Fette, Oele und Wachse, oder Oele, Fette und Wachse auf Grundlage synthetischer Ester (z. B. Phthalate, Adipate, Phosphate oder Trimellithate) sowie Gemische synthetischer Ester mit Mineralölen in beliebigem Gewichtsverhältnis, wobei diese Materialien als Weichmacher für Polymere oder als Textilspinnöle verwendbar sind, sowie wässrige Emulsionen solcher Materialien.

28. Wässrige Emulsionen von Natur- oder Synthesekautschuk, z. B. natürlicher Latex oder Latices carboxylierter Styrol/Butadiencopolymerer.

Im allgemeinen werden die erfindungsgemässen Stabilisatoren zu etwa 5 Gew.-% der stabilisierten Zusammensetzung angewandt, doch variiert dies mit dem jeweiligen Substrat und der jeweiligen Anwendung. Ein vorteilhafter Bereich liegt zwischen etwa 0,05 und etwa 2 % und insbesondere 0,1 bis etwa 1 %.

Die erfindungsgemässen Stabilisatoren lassen sich nach herkömmlichen Methoden in jeder beliebigen Stufe vor der Herstellung von Formkörpern daraus leicht in die organischen Polymeren einarbeiten. Beispielsweise kann man den Stabilisator mit dem Polymer in trockener Pulverform oder eine Suspension oder Emulsion des Stabilisators mit einer Lösung, Suspension oder Emulsion des Polymeren vermischen. Gegebenenfalls können die erfindungsgemässen stabilisierten Polymerzusammensetzungen auch verschiedene herkömmliche Zusatzstoffe wie die folgenden enthalten :

1. Antioxydantien

1.1. Einfache 2,6-Dialkylphenole wie beispielsweise 2,6-Di-tert.-butyl-4-methylphenol, 2-tert.-Butyl-4,6-dimethylphenol, 2,6-Di-tert.-butyl-4-methoxymethylphenol und 2,6-Di-octadecyl-4-methylphenol.

1.2. Derivate alkylierter Hydrochinone wie beispielsweise 2,5-Di-tert.-butylhydrochinon, 2,5-Di-tert.-amylhydrochinon, 2,6-Di-tert.-butylhydrochinon, 2,6-Di-tert.-butyl-4-hydroxyanisol, 3,5-Di-tert.-butyl-4-hydroxyanisol, Tris-(3,5-di-tert.-butyl-4-hydroxyphenyl)-phosphit, 3,5-Di-tert.-butyl-4-hydroxyphenylstearat und Bis-(3,5-di-tert.-butyl-4-hydroxyphenyl)-adipat.

1.3. Hydroxylierte Thiodiphenyläther wie beispielsweise 2,2'-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(3,6-di-sek.-amylphenol), 4,4'-Thio-bis-(6-tert.-butyl-2-methylphenol) und 4,4'-Bis-(2,6-dimethyl-4-hydroxyphenyl)-disulfid.

1.4. Alkylidenbisphenole wie beispielsweise 2,2'-Methylen-bis-(6-tert.-butyl-4-methylphenol), 2,2'-Methylen-bis-(6-tert.-butyl-4-äthylphenol), 4,4'-Methylen-bis-(6-tert.-butyl-2-methylphenol), 4,4'-Methylen-bis-(2,6-di-tert.-butylphenol), 2,6-Di-(3-tert.-butyl-5-methyl-2-hydroxybenzyl)-4-methylphenol, 2,2'-Methylen-bis-[4-methyl-6-(α-methylcyclohexyl)-phenol], 1,1-Bis-(3,5-dimethyl-2-hydroxyphenyl)-butan, 1,1-Bis-(5-tert.-butyl-4-hydroxy-2-methylphenyl)-butan, 2,2-Bis-(3,5-di-tert.-butyl-4-hydroxyphenyl)-propan, 1,1,3-Tris-(5-tert.-butyl-4-hydroxy-2-methylphenyl)-butan, 2,2-Bis-(5-tert.-butyl-4-hydroxy-2-methylphenyl)-4-n-dodecylmercaptobutan, 1,1,5,5-Tetra-(5-tert.-butyl-4-hydroxy-2-methylphenyl)-pentan und Aethylenglykol-bis-[3,3-bis-(3'-tert.-butyl-4'-hydroxyphenyl)-butyrat].

1.5. O-, N- und S-Benzylverbindungen wie beispielsweise 3,3',5,5'-Tetra-tert.-butyl-4-4'-dihydroxydibenzyläther, Octadecyl-4-hydroxy-3,5-dimethylbenzyl-mercaptoacetat, Tris-(3,5-di-tert.-butyl-4-hydroxybenzyl)-amin und Bis-(4-tert.-butyl-3-hydroxy-2,6-dimethylbenzyl)-dithioterephthalat.

1.6. Hydroxybenzylierte Malonate wie beispielsweise Dioctadecyl-2,2-bis-(3,5-di-tert.-butyl-2-hydroxybenzyl)-malonat. Dioctadecyl-2-(3-tert.-butyl-4-hydroxy-5-methylbenzyl)-malonat, Di-dodecylmercaptoäthyl-2,2-bis-(3,5-di-tert.-butyl-4-hydroxybenzyl)-malonat und Di-[4-(1,1,3,3-tetramethylbutyl)-phenyl]-2,2-bis-(3,5-di-tert.-butyl-4-hydroxybenzyl)-malonat.

1.7. Hydroxybenzylierte aromatische Verbindungen wie beispielsweise 1,3,5-Tris-(3,5-di-tert.-butyl-4-hydroxybenzyl)-2,4,6-trimethylbenzol, 1,4-Bis-(3,5-di-tert.-butyl-4-hydroxy)-benzyl-2,3,5,6-tetramethylbenzol und 2,4,6-Tri-(3,5-di-tert.-butyl-4-hydroxybenzyl)-phenol.

1.8. s-Triazinverbindungen wie beispielsweise 2,4-Bis-octyl-mercapto-6-(3,5-di-tert.-butyl-4-hydroxyanilino)-s-triazin, 2-Octylmercapto-4,6-bis-(3,5-di-tert.-butyl-4-hydroxyanilino)-s-triazin, 2-Octylmercapto-4,6-bis-(3,5-di-tert.-butyl-4-hydroxyphenoxy)-s-triazin, 2,4,6-Tris-(3,5-di-tert.-butyl-4-hydroxyphenoxy)-s-triazin, 2,4,6-Tris-(3,5-di-tert.-butyl-4-hydroxyphenyläthyl)-s-triazin und 1,3,5-Tris-(3,5-di-tert.-butyl-4-hydroxybenzyl)-isocyanurat.

1.9. Amide der β-(3,5-Di-tert.-butyl-4-hydroxyphenyl)-propionsäure wie beispielsweise 1,3,5-Tris-3,5-di-tert.-butyl-4-hydroxyphenylpropionyl)-hexahydro-s-triazin und N,N'-Di-(3,5-di-tert.-butyl-4-hydroxyphenylpropionyl)-hexamethylendiamin und N,N'-Bis-β-(3,5-di-tert.-butyl-4-hydroxyphenylpropionyl)-hydrazin.

1.10. Ester der β-(3,5-Di-tert.-butyl-4-hydroxyphenyl)-propionsäure mit einwertigen oder mehrwertigen Alkoholen wie beispielsweise Methanol, Aethanol, Octadecanol, 1,6-Hexandiol, 1,9-Nonandiol, Aethylenglykol, 1,2-Propandiol, Diäthylenglykol, Triäthylenglykol, Thiodiäthylenglykol, Neopentylglykol, Pentaerythrit, 3-Thia-undecanol, 3-Thia-pentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo [2,2,2] octan.

1.11. Ester der β-(5-tert.-Butyl-4-hydroxy-3-methylphenyl)-propionsäure mit einwertigen oder mehrwertigen Alkoholen wie beispielsweise Methanol, Aethanol, Octadecanol, 1,6-Hexandiol, 1,9-Nonandiol, Aethylenglykol, 1,2-Propandiol, Diäthylenglykol, Triäthylenglykol, Thiodiäthylenglykol, Neopentylglykol, Pentaerythrit, 3-Thia-undecanol, 3-Thia-pentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo [2,2,2] octan.

1.12. Ester der 3,5-Di-tert.-butyl-4-hydroxyphenylessigsäure mit einwertigen oder mehrwertigen Alkoholen wie beispielsweise Methanol, Aethanol, Octadecanol, 1,6-Hexandiol, 1,9-Nonandiol, Aethylenglykol, 1,2-Propandiol, Diäthylenglykol, Thiodiglykol, Neopentylglykol, Pentaerythrit, 3-Thia-undecanol, 3-Thia-pentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo [2,2,2] octan, insbesondere der Tetra-bis-ester des Pentaerythrits.

1.13. Benzylphosphonate wie beispielsweise Dimethyl-3,5-di-tert.-butyl-4-hydroxybenzyl-phosphonat, Diäthyl-3,5-di-tert.-butyl-4-hydroxybenzyl-phosphonat, Dioctadecyl-3,5-di-tert.-butyl-4-hydroxybenzyl-phosphonat und Dioctadecyl-5-tert.-butyl-4-hydroxy-3-methylbenzyl-phosphonat.

Die folgenden seien als Beispiele für weitere Zusatzstoffe genannt, die zusammen mit dem erfindungsgemässen Stabilisator und dem Antioxydans verwendet werden können :

1. Aminoarylderivate,

z. B. Phenyl-1-naphthylamin, Phenyl-2-naphthylamin, N,N'-Diphenyl-p-phenylendiamin, N,N'-Di-2-naphthyl-p-phenylendiamin, N,N'-Di-naphthyl-p-phenylendiamin, N,N'-Di-sek.-butyl-p-phenylendiamin, 6-Aethoxy-2,2,4-trimethyl-1,2-dihydrochinolin, 6-Dodecyl-2,2,4-trimethyl-1,2-di-hydrochinolin, Mono- und Dioctyliminodibenzyl, polymerisiertes 2,2,4-Trimethyl-1,2-dihydrochinolin, octyliertes Diphenylamin, nonyliertes Diphenylamin, N-Phenyl-N'-cyclohexyl-p-phenylendiamin, N-Phenyl-N'-isopropyl-p-phenylendiamin, N,N'-Di-sek.-octyl-p-phenylendiamin, N-Phenyl-N'-sek.-octyl-p-phenylendiamin, N,N'-Di-(1,4-dimethylpentyl)-p-phenylendiamin, N,N'-dimethyl-N,N'-di-(sek.-octyl)-p-phenylendiamin, 2,6-Dimethyl-4-methoxyanilin, 4-Aethoxy-N-sek.-butylanilin, das Diphenylamin/Acetonkondensationsprodukt, Aldol-1-naphthylamin und Phenothiazin.

Bei Verwendung der obigen Antioxydantien sind Verfärbungseffekte zu berücksichtigen.

2. UV-Absorber und Lichtschutzmittel

2.1. 2-(2'-Hydroxyphenyl)-benztriazole, beispielsweise die 5'-Methyl-, 3',5'-Di-tert.-butyl-, 5'-tert.-Butyl-, 5'-(1,1,3,3-Tetramethylbutyl)-, 5-Chlor-3',5'-di-tert.-butyl-, 5-Chlor-3'-tert.-butyl-5'-methyl-, 3'-sek.-Butyl-5'-tert.-butyl-, 3'-α-Methylbenzyl-5'-methyl-, 3'-α-Methylbenzyl-5'-methyl-5-chlor-, 4'-Hydroxy-, 4'-Methoxy-, 4'-Octoxy-, 3',5'-Di-tert.-amyl-, 3'-Methyl-5'-carbomethoxyäthyl-, 3',5'-Bis-(α,α-dimethylbenzyl)-, 3',5'-Bis-(α,α-dimethyl-benzyl)-5-chlor-, 3',5'-Di-tert.-octylphenyl-, 3',5'-Di-tert.-octylphenyl-5-chlor- und 5-Chlor-3',5'-di-tert.-amyl-derivate.

2.2. 2,4-Bis-(2'-hydroxyphenyl)-6-alkyl-s-triazine, beispielsweise das 6-Aethyl-, 6-Heptadecyl- oder 6-Undecylderivat.

2.3. 2-Hydroxybenzophenone, beispielsweise das 4-Hydroxy-, 4-Methoxy-, 4-Octoxy-, 4-Decyloxy-, 4-Dodecyloxy-, 4-Benzyloxy-, 2',4,4'-Trihydroxy- oder 2'-Hydroxy-4,4'-dimethoxyderivat.

2.4. 1,3-Bis-(2'-hydroxybenzoyl)-benzole, beispielsweise 1,3-Bis-(2'-hydroxy-4'-hexyloxy-benzoyl)-benzol, 1,3-Bis-(2'-hydroxy-4'-octyloxy-benzoyl)-benzol oder 1,3-Bis-(2'-hydroxy-4'-dodecyloxy-benzoyl)-benzol.

2.5. Ester gegebenenfalls substituierter Benzoesäuren, beispielsweise Phenylsalicylat, Octylphenylsalicylat, Dibenzoylresorcin, Bis-(4-tert.-butylbenzoyl)-resorcin, Benzoylresorcin, 3,5-Di-tert.-butyl-4-hydroxybenzoesäure-2,4-di-tert.-butylphenylester oder -octadecylester oder -2-methyl-4,6-di-tert.-butylester.

2.6. Acrylate, beispielsweise α-Cyan-β,β-diphenylacrylsäureäthylester oder -isooctylester, α-Carbomethoxyzimtsäuremethylester, α-Cyan-β-methyl-p-methoxyzimtsäuremethylester oder -butylester oder N-(β-Carbomethoxyvinyl)-2-methylindolin.

2.7. Sterisch gehinderte Amine, beispielsweise 4-Benzoyl-2,2,6,6-tetramethylpiperidin, 4-Stearyloxy-2,2,6,6-tetramethylpiperidin, Bis-(2,2,6,6-tetramethyl-piperidyl)-sebacinat oder 3-n-Octyl-7,7,9,9-tetramethyl-1,3,8-triaza-spiro [4,5] decan-2,4-dion.

2.8. Oxalsäurediamide, beispielsweise 4,4'-Dioctyloxy-oxanilid, 2,2'-Didodecyloxy-5,5'-di-tert.-butyl-oxanilid, 2-Aethoxy-2'-äthyl-oxanilid, N,N'-Bis-(3-dimethylaminopropyl)-oxalamid, 2-Aethoxy-5-tert.-butyl-2'-äthyl-5,4'-di-tert.-butyloxanilid oder Gemische von ortho- und para-methoxy- bzw. o- und p-äthoxydisubstituierten Oxaniliden.

3. Metalldesaktivatoren,

beispielsweise Oxanilid, Isophthalsäuredihydrazid, Sebacinsäure-bis-phenylhydrazid, Bis-benzylidenoxalsäuredihydrazid, N,N'-Diacetyladipinsäuredihydrazid, N,N'-Bis-salicyloyl-oxalsäuredihydrazid, N,N'-Bis-salicyloylhydrazin, N,N'-Bis-(3,5-di-tert.-butyl-4-hydroxyphenylpropionyl)-hydrazin, N-Salicyloyl-N'-salicylhydrazin, 3-Salicyloyl-amino-1,2,4-triazol oder N,N'-Bis-salicyloyl-thiopropionsäuredihydrazid.

4. Basische Costabilisatoren,

beispielsweise Alkali- und Erdalkalisalze höherer Fettsäuren, z. B. Ca-Stearat, Zn-Stearat, Mg-Behenat, Na-Ricinoleat oder K-Palmitat.

5. Nukleierungsmittel,

beispielsweise 4-tert.-Butylbenzoesäure, Adipinsäure oder Diphenylessigsäure.

6. Phosphite,

wie beispielsweise Triphenylphosphit, Diphenylalkylphosphite, Phenyldialkylphosphite, Tri-(nonylphenyl)-phosphit, Trilaurylphosphit, Trioctadecylphosphit, 3,9-Isodecyloxy-2,4,8,10-tetraoxa-3,9-diphosphaspiro [5,5] undecan und Tri-(4-hydroxy-3,5-di-tert.-butylphenyl)-phosphit.

Weitere Zusatzstoffe, die in die stabilisierten Zusammensetzungen miteingearbeitet werden können, sind Thiosynergisten wie Dilaurylthiodipropionat oder Distearylthiodipropionat, Schmiermittel wie Stearylalkohol, Füllstoffe, Russ, Asbest, Kaolin, Talkum, Glasfasern, Pigmente, optische Aufheller, Flammschutzmittel und Antistatika.

Die erfindungsgemässen Verbindungen können für sich als einziger Stabilisator entweder mit hauptsächlich einer Antioxydansfunktion oder einer Lichtschutzmittelfunktion eingesetzt werden, oder der Stabilisator kann die Wirkung als Antioxydans und als Lichtschutzmittel in sich vereinigen. Die Stabilisatoren lassen sich zusammen mit phenolischen Antioxydantien, Schmiermitteln wie Calciumstearat, Pigmenten, Farbmitteln oder Farbstoffen, UV-Absorbern, Lichtschutzmitteln wie sterisch gehinderten Aminen, Metalldesaktivatoren, Talkum und sonstigen Füllstoffen verwenden.

Die vorliegenden Verbindungen lassen sich zwar zweckmässig als Stabilisatoren für verschiedene Substrate sowohl für sich als auch in Verbindung mit weiteren Zusatzstoffen verwenden, doch ergibt die Kombination der vorliegenden Verbindungen mit ausgewählten sterisch gehinderten phenolischen Antioxydantien einen erhöhten Schutz solcher Substrate. Dabei haben sich aus der folgenden Gruppe ausgewählte phenolische Antioxydantien als besonders geeignet erwiesen : 2,6-Di-tert.-butyl-4-methylphenol, 4,4'-Thio-bis-(6-tert.-butyl-3-methylphenol), 2,2'-Methylen-bis-(6-tert.-butyl-3-methylphenol), 4,4'-Methylen-bis-(2,6-di-tert.-butylphenol), 1,1,3-Tris-(5-tert.-butyl-4-hydroxy-2-methylphenyl)-butan, 1,3,5-Tris-(3,5-di-tert.-butyl-4-hydroxybenzyl)-2,4,6-trimethylbenzol, 2-Octylthio-4,6-bis-(3,5-di-tert.-butyl-4-hydroxyanilino)-s-triazin, n-Octadecyl-3,5-di-tert.-butyl-4-hydroxy-hydrocinnamat, Neopentantetrayl-tetrakis-(3,5-di-tert.-butyl-4-hydroxyhydrocinnamat), 1,3,5-Tris-(3,5-di-tert.-butyl-4-hydroxybenzyl)-isocyanurat, Thiodiäthylen-bis-(3,5-di-tert.-butyl-4-hydroxyhydrocinnamat), der Tris-(2-hydroxyäthyl)-isocyanuratester der β-(3,5-Di-tert.-butyl-4-hydroxyphenyl)-propionsäure, 6,6'-Aethyliden-bis-(2,4-di-tert.-butylphenol), 6,6'-Methylen-bis-(2,4-di-tert.-butylphenol) und 1,3,5-Tris-(4-tert.-butyl-3-hydroxy-2,6-dimethylbenzyl)-isocyanurat.

Die Zusammensetzungen bestehen aus (a) einem Substrat, vorzugsweise einem Polyolefin wie Polypropylen, (b) etwa 0,01 bis etwa 5 Gew.-% der Zusammensetzung, vorzugsweise etwa 0,025 bis etwa 2 % und besonders bevorzugt 0,025 bis 1 %, einer vorliegenden Verbindung oder einem Gemisch solcher sowie gegebenenfalls (c) einem phenolischen Antioxydans oder einem Gemisch solcher aus der eben erwähnten Gruppe ausgewählter Antioxydantien, ebenfalls im Bereich von 0,01 bis 5 % und vorzugsweise 0,05 bis 1 Gew.-% der Zusammensetzung.

Ebenso sind die folgenden Lichtschutzmittel zur Anwendung, entweder für sich oder zusammen mit den angeführten phenolischen Antioxydantien, als Zusatzstoffe zur Einarbeitung mit den vorliegenden Stabilisatoren in die genannten Substrate bevorzugt : 2-(2'-Hydroxy-5'-methylphenyl)-benztriazol, 2-(3',5'-Di-tert.-butyl-2'-hydroxyphenyl)-benztriazol, 2-(2'-Hydroxy-3',5'-di-tert.-amylphenyl)-benztriazol, Nickel-bis-[O-äthyl-(3,5-di-tert.-butyl-4-hydroxybenzyl)-phosphonat], Bis-(1,2,2,6,6-Pentamethyl-4-piperidyl)-2-n-butyl-2-(3,5-di-tert.-butyl-4-hydroxybenzyl)-malonat, Bis-(2,2,6,6-tetramethyl-4-piperidyl)-sebacinat, das Bernsteinsäuredimethylesterpolymer mit 4-Hydroxy-2,2,6,6-tetramethyl-1-piperidinäthanol und das Polymer des 2,4-Dichlor-6-octylamino-s-triazins mit N'-(2,2,6,6-Tetramethyl-4-piperidyl)-hexamethylendiamin.

Die nachfolgenden Beispiele dienen der näheren Erläuterung von Ausführungsbeispielen dieser Erfindung. Dabei sind Teile stets Gewichtsteile, falls nicht anders angegeben.

## Beispiel 1

6-(N-Methylaminoäthoxy)-2,4,8,10-tetra-tert.-butyl-12H-dibenzo [d,g] [1.3.2] dioxaphosphocin

Man beschickt einen mit einer Flamme getrockneten Kolben unter Stickstoff mit 32,3 g Phosphortrichlorid in 235 ml trockenem Toluol und danach mit einer Lösung von 100 g 2,2'-Methylen-bis-(4,6-di-tert.-butylphenol) und 47,5 g Triäthylamin in 300 ml trockenem Toluol bei einer 15 °C nicht übersteigenden Temperatur. Man rührt bei Raumtemperatur bis zum Verschwinden der Hydroxylabsorption im IR-Spektrum. Dann gibt man eine Lösung von 17,6 g N-Methyläthanolamin und 23,8 g Triäthylamin dazu. Man erhitzt auf 90 °C, bis die Umsetzung laut Dünnschichtchromatographie vollständig ist. Das Gemisch wird filtriert, am Rotationsverdampfer eingedampft, über Silikagel mit Methanol/Dichlormethan als Laufmittel chromatographiert und aus Acetonitril umkristallisiert, was 74,4 g (60 %) weissen Feststoff vom Schmelzpunkt 135-140 °C ergibt.

Analyse :

| | |
|---|---|
| Berechnet für $C_{32}H_{50}NO_3P$ : | C, 72,8 ; H, 9,5 ; N, 2,6. |
| Gefunden : | C, 72,8 ; H, 9,5 ; N, 2,6. |

## Beispiel 2

6-(Aminoäthoxy)-2,4,8,10-tetra-tert.-butyl-12H-dibenzo [d,g]-[1,3,2] dioxaphosphocin

Man beschickt einen mit einer Flamme getrockneten Kolben unter Stickstoff bei Raumtemperatur mit 0,98 g Natriumhydrid in 100 ml trockenem Tetrahydrofuran und Aminoäthanol bis zum Ende der Gasentwicklung. Dann gibt man eine Lösung von 20 g 2,2'-Methylen-bis-[4,6-di-tert.-butylphenyl]-phosphorochlorodit in 50 ml trockenem Tetrahydrofuran dazu. Man rührt bei Raumtemperatur, bis die Umsetzung laut Dünnschichtchromatographie vollständig ist. Das Gemisch wird eingedampft, mit 200 ml trockenem Toluol angerieben und filtriert. Das erhaltene Filtrat wird am Rotationsverdampfer eingedampft, über Silikagel mit Methanol/Dichlormethan als Laufmittel chromatographiert und aus Acetonitril umkristallisiert, was 4,2 g (20 %) weisses Pulver vom Schmelzpunkt 216-221 °C ergibt.

Analyse :

| | |
|---|---|
| Berechnet für $C_{31}H_{48}NO_3P$ : | C, 72,5 ; H, 9,4 ; N, 2,7 ; P, 6,0. |
| Gefunden : | C, 72,7 ; H, 9,8 ; N, 2,9 ; P, 5,9. |

## Beispiel 3

2,2'-Bis-(2,4,8,10-tetra-tert.-butyl-12H-dibenzo [d,g] [1,3,2]-dioxa-phosphocin-6-yl-6-oxy)-diäthylamin

Man verfährt wie in Beispiel 1, unter Verwendung von 27,47 g Phosphortrichlorid, 84,93 g 2,2'-Methylen-bis-(4,6-di-tert.-butylphenol), 10,51 g Diäthanolamin und 60,72 g Triäthylamin. Das Produkt wird aus 2-Butanon/Toluol und Toluol/Acetonitril umkristallisiert, was 12,0 g weissen Feststoff vom Schmelzpunkt 226-232 °C ergibt.

Analyse :

| | |
|---|---|
| Berechnet für $C_{62}H_{93}NO_6P_2$ : | C, 73,7 ; H, 9,3 ; N, 1,4. |
| Gefunden : | C, 74,2 ; H, 9,1 ; N, 1,4. |

Beispiel 4

2,2'-Bis-(2,4,8,10-tetra-tert.-butyl-dibenzo [d,f] [1,3,2] dioxaphosphepin-6-yl-6-oxy)-diäthylamin

Man verfährt wie in Beispiel 1, unter Verwendung von 27,47 g Phosphortrichlorid, 82,13 g 3,3',5,5'-Tetra-tert.-butylbiphenyl-2,2'-diol, 10,51 g Diäthanolamin und 60,72 g Triäthylamin. Das Produkt wird durch Entspannungschromatographie gereinigt, was einen weissen Feststoff vom Schmelzpunkt 96-100 °C ergibt.

Analyse :

| | |
|---|---|
| Berechnet für $C_{60}H_{89}NO_6P_2$ : | C, 73,4 ; H, 9,1 ; N, 1,4. |
| Gefunden : | C, 73,4 ; H, 9,3 ; N, 1,3. |

Beispiel 5

6-[2'-(tert.-Butylamino)-äthoxy]-2,4,8,10-tetra-tert.-butyl-dibenzo [d,f] [1,3,2] dioxaphosphepin

Man verfährt wie in Beispiel 1, unter Verwendung von 6,87 g Phosphortrichlorid, 20,53 g 3,3',5,5'-Tetra-tert.-butyl-biphenyl-2,2'-diol, 5,86 g N-tert.-Butylaminoäthanol und 15,18 g Triäthylamin. Das Produkt wird zweimal aus Acetonitril umkristallisiert, was 17,74 g (64 % Ausbeute) weissen Feststoff vom Schmelzpunkt 135-138 °C ergibt.

Analyse :

| | |
|---|---|
| Berechnet für $C_{34}H_{34}NO_3P$ : | C, 73,5 ; H, 9,8 ; N, 2,5. |
| Gefunden : | C, 74,1 ; H, 9,7 ; N, 2,5. |

Beispiel 6

6-[2'-(tert.-Butylamino)-äthoxy]-2,4,8,10-tetra-tert.-butyl-12-methyl-12H-dibenzo [d,g] [1,3,2] dioxaphosphocin

Man verfährt wie in Beispiel 1, unter Verwendung von 27,47 g Phosphortrichlorid, 87,74 g (2,2'-Aethyliden-bis-(4,6-di-tert.-butylphenol), 23,44 g N-tert.-Butylaminoäthanol und 60,72 g Triäthylamin. Das Produkt wird zweimal aus 2-Butanon umkristallisiert, was 43,93 g weissen Feststoff vom Schmelzpunkt 174-175 °C ergibt.

Analyse :

| | |
|---|---|
| Berechnet für $C_{36}H_{58}NO_3P$ : | C, 74,1 ; H, 10,0 ; N, 2,4. |
| Gefunden : | C, 74,4 ; H, 9,7 ; N, 2,4. |

Beispiel 7

6-[2'-(tert.-Butylamino)-äthoxy]-2,4,8,10-tetra-tert.-butyl-12H-dibenzo [d,g] [1,3,2] dioxaphosphocin

Man verfährt wie in Beispiel 1, unter Verwendung von 27,47 g Phosphortrichlorid, 84,93 g 2,2'-Methylen-bis-(4,6-di-tert.-butylphenol), 23,44 g N-tert.-Butylaminoäthanol und 60,72 g Triäthylamin. Das Produkt wird aus Aceton umkristallisiert, was 59,48 g (52 % Ausbeute) weissen Feststoff vom Schmelzpunkt 189-192 °C ergibt.

Analyse :

| | |
|---|---|
| Berechnet für $C_{35}H_{56}NO_3P$ : | C, 73,8 ; H, 9,9 ; N, 2,5. |
| Gefunden : | C, 74,0 ; H, 9,8 ; N, 2,5. |

Beispiel 8

Verarbeitungsstabilität von Polypropylen Grundformulierung

| | |
|---|---|
| Polypropylen* | 100 Teile |
| Calciumstearat | 0,10 Teile |

* Profax 6801 der Hercules Chemical

Die Stabilisatoren werden als Lösungen in Methylenchlorid durch Lösungsvermischung in Polypropylen eingearbeitet, und nach Entfernung des Lösungsmittels durch Verdampfen bei vermindertem Druck wird das Harz unter den folgenden Extruderbedingungen extrudiert :

| | Temperatur (°C) |
|---|---|
| Zylinder Nr. 1 | 260 |
| Zylinder Nr. 2 | 274 |
| Zylinder Nr. 3 | 288 |
| Düse Nr. 1 | 288 |
| Düse Nr. 2 | 288 |
| Düse Nr. 3 | 288 |
| U.p.M. | 100 |

Während der Extrusion wird der Extruderinnendruck mittels eines Druckwandlers bestimmt. Nach der ersten, dritten und fünften Extrusion wird das Harzgranulat jeweils bei 193 °C zu 3,2 mm dicken Plättchen verpresst, an denen man den Gelbwert der Proben nach ASTM D1925-63T bestimmt. Die Ergebnisse sind in der nachfolgenden Tabelle angeführt.

Extrusionstemperatur 288 °C

| | Wandlerdruck ($kg/cm^2$) nach Extrusion | | | Gelbwert nach Extrusion | | |
|---|---|---|---|---|---|---|
| Zusatzstoffe | 1 | 3 | 5 | 1 | 3 | 5 |
| Keine | 95 | 81 | 70 | 5,1 | 7,6 | 9,2 |
| 0,1% Bsp. 3 | 111 | 102 | 91 | 4,9 | 6,5 | 7,9 |
| 0,1% Bsp. 4 | 109 | 102 | 88 | 5,1 | 5,6 | 6,6 |
| 0,1% Bsp. 7 | 109 | 100 | 95 | 5,2 | 5,9 | 7,4 |
| 0,1% Antioxydans A* | 102 | 95 | 90 | 12,1 | 17,4 | 19,5 |
| 0,1% Antioxydans A* + 0,5% Bsp. 4 | 109 | 104 | 100 | 10,7 | 15,4 | 18,2 |

* Neopentyltetrayl-tetrakis-[3-(3',5'-di-tert.-butyl-4'-hydroxyphenyl)-propionat]

## Beispiel 9

Man verfährt genau wie in Beispiel 8, jedoch unter Anwendung der folgenden Grundformulierung und Extruderbedingungen.

### Grundformulierung

| | |
|---|---|
| Polypropylen* | 100 Teile |
| Calciumstearat | 0,10 Teile |

* Profax 6501 der Hercules Chemical

### Extruderbedingungen

| | Temperatur (°C) |
|---|---|
| Zylinder Nr. 1 | 232 |
| Zylinder Nr. 2 | 246 |
| Zylinder Nr. 3 | 260 |
| Düse Nr. 1 | 260 |
| Düse Nr. 2 | 260 |
| Düse Nr. 3 | 260 |
| U.p.M. | 100 |

Die Ergebnisse sind in der nachfolgenden Tabelle angeführt :

Extrusionstemperatur 260 °C

| | Wandlerdruck nach Extrusion kg/cm$^2$) | | | Gelbwert nach Extrusion | | |
|---|---|---|---|---|---|---|
| Zusatzstoffe | 1 | 3 | 5 | 1 | 3 | 5 |
| Keine | 37 | 33 | 31 | 3,8 | 5,8 | 8,0 |
| 0,1% Antioxydans A* 5 + 0,05% Bsp. 4 | 45 | 44 | 40 | 3,1 | 5,3 | 7,5 |
| 0,1% Antioxydans A* + 0,05% Bsp. 7 | 47 | 43 | 38 | 3,6 | 2,0 | 9,2 |

* Neopentyltetrayl-tetrakis-[3-(3',5'-di-tert.-butyl-4'-hydroxyphenyl)-propionat]

Zusammenfassend ist es ersichtlich, dass vorliegende Erfindung neuartige cyclische Phosphitverbindungen mit wirksamem Stabilisierungseffekt zur Verfügung stellt.

**Patentansprüche**

1. Verbindungen der Formel

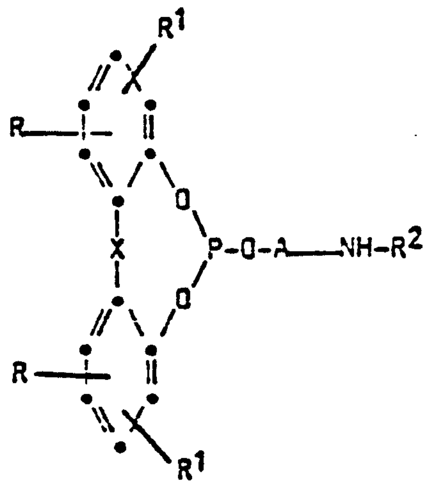

worin

R und $R^1$ unabhängig voneinander für Wasserstoff, Alkyl mit 1 bis 18 Kohlenstoffatomen, Cycloalkyl mit 5 oder 6 Kohlenstoffatomen oder gegebenenfalls durch Alkyl mit 1 bis 18 Kohlenstoffatomen substituiertes Phenyl,

A für Alkylen mit 1 bis 6 Kohlenstoffatomen oder Cycloalkylen mit 5 oder 6 Kohlenstoffatomen,

X für eine direkte Bindung oder Alkyliden mit 1 bis 12 kohlenstoffatomen und

$R^2$ für Wasserstoff, Alkyl mit 1 bis 12 Kohlenstoffatomen oder die Gruppe

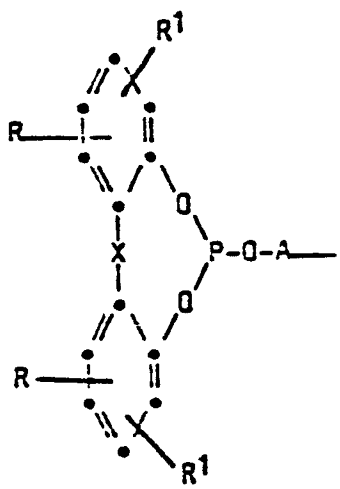

stehen.

2. Verbindungen nach Anspruch 1, dadurch gekennzeichnet, dass R (wenn R nicht gleich H) in den Phenylringen jeweils in ortho-Stellung zum Phosphitsauerstoff steht.

3. Verbindungen nach Anspruch 2, dadurch gekennzeichnet, dass R für Alkyl mit 4 bis 8 Kohlenstoffatomen steht.

4. Verbindungen nach Anspruch 1, dadurch gekennzeichnet, dass $R^1$ für tert.-Butyl, tert.-Pentyl oder tert.-Octyl steht.

5. Verbindungen nach Anspruch 1, dadurch gekennzeichnet, dass $R^1$ für tert.-Alkyl mit 4 bis 8 Kohlenstoffatomen steht.

6. Verbindungen nach Anspruch 1, dadurch gekennzeichnet, dass X für Alkyliden der Formel

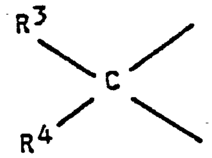

steht, worin $R^3$ und $R^4$ unabhängig voneinander Wasserstoff oder Alkyl mit 1 bis 7 Kohlenstoffatomen bedeuten, mit der Massgabe, dass die Gesamtzahl Kohlenstoffatome 12 nicht übersteigt.

7. Verbindungen nach Anspruch 1, dadurch gekennzeichnet, dass $R^2$ für Wasserstoff, Alkyl mit 1 bis 4 Kohlenstoffatomen oder eine Gruppe

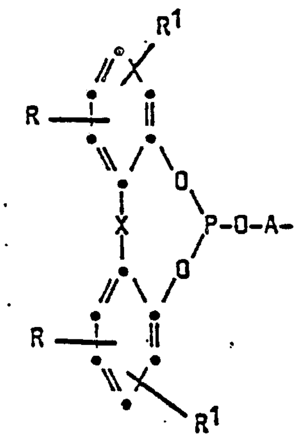

steht.

8. 6-(N-Methylaminoäthoxy)-2,4,8,10-tetra-tert.-butyl-12H-dibenzo [d,g] [1,3,2] dioxaphosphocin.

9. 6-(Aminoäthoxy)-2,4,8,10-tetra-tert.-butyl-12H-dibenzo [d,g] [1,3,2] dioxaphosphocin.

10. 2,2'-Bis-(2,4,8,10-tetra-tert.-butyl-12H-dibenzo-[d,g] [1,3,2] dioxaphosphocin-6-yl-6-oxy)-diäthylamin.

11. 2,2'Bis-(2,4,8,10-tetra-tert.-butyl-dibenzo [d,f] [1,3,2] dioxaphosphepin-6-yl-6-oxy).-diäthylamin.

12. 6-[2'-(tert.-Butylamino)-äthoxy]-2,4,8,10-tetra-tert.-butyl-dibenzo [d,f] [1,3,2] dioxaphosphepin.

13. 6-[2'-(tert.-Butylamino)-äthoxy]-2,4,8,10-tetra-tert.-butyl-12-methyl-12H-dibenzo [d,g] [1,3,2] dioxaphosphocin.

14. 6-[2'-(tert.-Butylamino)-äthoxy]-2,4,8,10-tetra-tert.-butyl-12H-dibenzo [d,g] [1,3,2] dioxaphosphocin.

15. Stoffzusammensetzungen, dadurch gekennzeichnet, dass sie aus einem synthetischen Polymer oder aus einer Mineral- oder Syntheseflüssigkeit bestehen, die oxydativem, thermischem und aktinischem Abbau unterliegen, und mit einer Verbindung nach Anspruch 1 stabilisiert sind.

16. Zusammensetzungen nach Anspruch 15, dadurch gekennzeichnet, dass als solches synthetisches Polymer ein Polyolefinhomopolymer oder -copolymer vorliegt.

17. Zusammensetzungen nach Anspruch 16, dadurch gekennzeichnet, dass dieses Polyolefin aus der Polyäthylen, Polypropylen, Polyisobutylen, Poly-(buten-1), Poly-(penten-1), Poly-(3-methylbuten-1) und Poly-(4-methylpenten-1) umfassenden Gruppe ausgewählt ist.

18. Zusammensetzungen nach Anspruch 15, dadurch gekennzeichnet, dass dieses Polymer aus der Polystyrol, Acrylnitril/Butadien/Styrol, Styrol/Butadienkautschuk, Polyester, Polyurethane, Polycarbonate, Polyamide und Polysulfone umfassenden Gruppe ausgewählt ist.

**Claims**

1. A compound of the formula

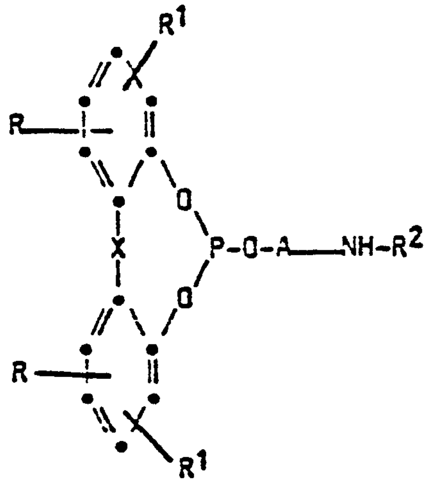

wherein

R and $R^1$ are each independently of the other hydrogen, alkyl of 1 to 18 carbon atoms, cycloalkyl of 5 or 6 carbon atoms, phenyl or phenyl substitued by alkyl of 1 to 18 carbon atoms ;

A is alkylene of 1 to 6 carbon atoms or cycloalkylene of 5 to 6 carbon atoms ;

X is a direct bond or alkylidene of 1 to 12 carbon atoms ; and

$R^2$ is hydrogen, alkyl of 1 to 12 carbon atoms or the group

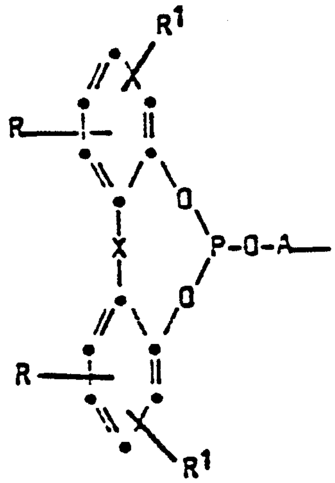

2. A compound according to claim 1, wherein R (if R is not hydrogen) is in the ortho position to the phosphite oxygen in each of the phenyl rings.

3. A compound according to claim 2, wherein R is alkyl of 4 to 8 carbon atoms.

4. A compound according to claim 1, wherein $R^1$ is tert-butyl, tert-pentyl or tert-octyl.

5. A compound according to claim 1, wherein $R^1$ is tert-alkyl of 4 to 8 carbon atoms.

6. A compound according to claim 1, wherein X is alkylidene of the formula

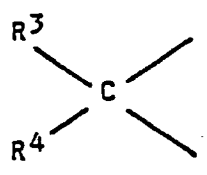

wherein $R^3$ and $R^4$ are each independently of the other hydrogen or alkyl of 1 to 7 carbon atoms, with the proviso that the total number of carbon atoms does not exceed 12.

7. A compound according to claim 1, wherein $R^2$ is hydrogen, alkyl of 1 to 4 carbon atoms or the group

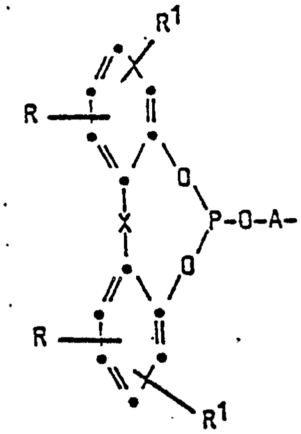

8. 6-(N-methylaminoethoxy)-2,4,8,10-tetra-tert-butyl-12H-dibenzo-[d,g] [1,3,2] dioxaphosphocin.

9. 6-(Aminoethoxy)-2,4,8,10-tetra-tert-butyl-12H-dibenzo [d,g] [1,3,2]-dioxaphosphocin.

10. 2,2'-Bis(2,4,8,10-tetra-tert-butyl-12H-dibenzo [d,g] [1,3,2] dioxaphosphocin-6-yl-6-oxy) diethylamine.

11. 2,2'-Bis(2,4,8,10-tetra-tert-butyl-dibenzo [d,f] [1,3,2] dioxaphosphepin-6-yl-6-oxy) diethylamine.

12. 6-[2'-(tert-Butylamino) ethoxy]-2,4,8,10-tetra-tert-butyl-dibenzo-[d,f] [1,3,2] dioxaphosphepin.

13. 6-[2'-(tert-Butylamino) ethoxy]-2,4,8,10-tetra-tert-butyl-12-methyl-12H-dibenzo [d,f] [1,3,2] dioxaphosphocin.

14. 6-[2'-(tert-Butylamino) ethoxy]-2,4,8,10-tetra-tert-butyl-12H-dibenzo [d,g] [1,3,2] dioxaphosphocin.

15. A composition comprising a synthetic polymer or a mineral or synthetic liquid subject to oxidative, thermal and actinic degradation and stabilized with an effective stabilizing amount of a compound according to claim 1.

16. A composition according to claim 15, wherein said synthetic polymer is a polyolefin homopolymer or copolymer.

17. A composition according to claim 16, wherein said polyolefin is selected from the group consisting of polyethylene, polypropylene, polyisobutylene, poly(butene-1), poly(pentene-1), poly(methylbutene-1) and poly(4-methylpentene-1).

18. A composition according to claim 15, wherein said polymer is selected from the group consisting of polystyrene, acrylonitrile/butadiene/styrene, styrene/butadiene rubber, polyesters, polyurethanes, polycarbonates, polyamides and polysulfones.

**Revendications**

1. Composés répondant à la formule :

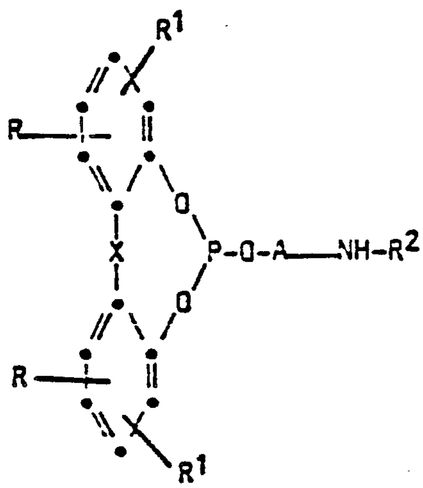

dans laquelle :

R et $R^1$ représentent chacun, indépendamment l'un de l'autre, l'hydrogène, un alkyle en $C_1$-$C_{18}$, un cycloalkyle à 5 ou 6 atomes de carbone ou un phényle éventuellement porteur d'un alkyle en $C_1$-$C_{18}$,

A représente un alkylène contenant de 1 à 6 atomes de carbone ou un cycloalkylène à 5 ou 6 atomes de carbone,

X représente une liaison directe ou un alkylidène contenant de 1 à 12 atomes de carbone et

$R^2$ représente l'hydrogène, un alkyle en $C_1$-$C_{12}$ ou un radical de formule :

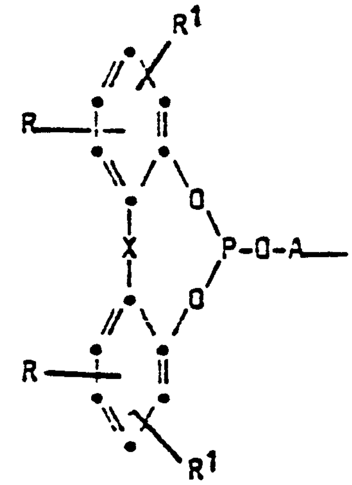

2. Composés selon la revendication 1, caractérisés en ce que chacun des R (lorsqu'ils ne représentent pas l'hydrogène) occupe, sur son noyau phényle, la position ortho par rapport à l'oxygène du phosphite.

3. Composés selon la revendication 2 caractérisés en ce que R représente un alkyle contenant de 4 à 8 atomes de carbone.

4. Composés selon la revendication 1 caractérisés en ce que $R^1$ représente un radical tert-butyle, tert-pentyle ou tert-octyle.

5. Composés selon la revendication 1 caractérisés en ce que $R^1$ représente un radical alkyle tertiaire contenant de 4 à 8 atomes de carbone.

6. Composés selon la revendication 1 caractérisés en ce que X représente un radical alkylidène répondant à la formule suivante :

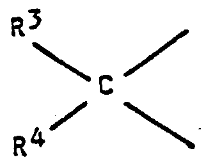

dans laquelle $R^3$ et $R^4$ représentent chacun, indépendamment l'un de l'autre, l'hydrogène ou un radical alkyle contenant de 1 à 7 atomes de carbone, avec la condition que le nombre total des atomes de carbone ne dépasse pas 12.

7. Composés selon la revendication 1 caractérisés en ce que $R^2$ représente l'hydrogène, un alkyle contenant de 1 à 4 atomes de carbone ou un radical de formule :

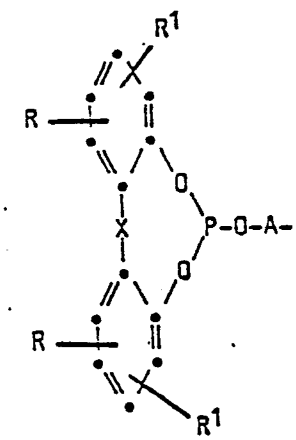

8. (N-Méthylamino-éthoxy)-6 tétra-tert-butyl-2,4,8,10(12H)-dibenzo [d,g] [1,3,2-dioxaphosphocinne].

9. (Amino-éthoxy)-6 tétra-tert-butyl-2,4,8,10(12H)-dibenzo [d,g] [1,3,2-dioxaphosphocinne].

10. Bis-(tétra-tert-butyl-2,4,8,10(12H)-dibenzo [d,g] [1,3,2-dioxaphosphocinne]-yl-6 oxy)-2,2′ diéthylamine.

11. Bis-(tétra-tert-butyl-2,4,8,10 dibenzo-[d,g] [1,3,2-dioxaphosphépinne]-yl-6 oxy)-2,2′ diéthylamine.

12. [(Tert-butylamino)-2 éthoxy]-6 tétra-tert-butyl-2,4,8,10 dibenzo [d,f] [1,3,2-dioxaphosphépinne].

13. [(Tert-butylamino)-2 éthoxy]-6 tétra-tert-butyl-2,4,8,10 méthyl-12(12H)-dibenzo [d,g] [1,3,2-dioxaphosphocinne].

14. [(Tert-butylamino)-2 éthoxy]-6 tétra-tert-butyl-2,4,8,10(12H)-dibenzo [d,g] [1,3,2-dioxaphosphocinne].

15. Compositions caractérisées en ce qu'elles sont constituées d'un polymère synthétique ou d'un liquide minéral ou synthétique sensibles à la dégradation sous l'effet d'une oxydation, de la chaleur ou d'un rayonnement, et en ce qu'elles sont stabilisées par un composé selon la revendication 1.

16. Compositions selon la revendication 15 caractérisées en ce qu'elles contiennent, comme polymère synthétique, un homopolymère ou un copolymère d'oléfine.

17. Compositions selon la revendication 16 caractérisées en ce que le polymère est une polyoléfine pris dans l'ensemble constitué par le polyéthylène, le polypropylène, le polyisobutène, le poly-(butène-1), le poly-(pentène-1), le poly-(méthyl-3 butène-1) et le poly-(méthyl-4 pentène-1).

18. Compositions selon la revendication 15 caractérisées en ce que le polymère est pris dans l'ensemble constitué par le polystyrène, le terpolymère acrylonitrile/butadiène/styrène, le caoutchouc styrène/butadiène, les polyesters, les polyuréthannes, les polycarbonates, les polyamides et les polysulfones.